# EUROPEAN PATENT APPLICATION

(11) **EP 1 050 974 A2**
(43) Date of publication of application: **08.11.2000**
(21) Application number: 99201648.5
(22) Date of filing: 21.05.1999
(51) Int. Cl.: H04B 3/54, H02J 13/00

(54) **A data communication device**

(30) Priority: 03.05.1999 EP 99201385
(71) Applicant: DDL Design N.V., 8020 Ruddervoorde (BE)
(72) Inventor: Deschrijver, Danny, 8020 Ruddervoorde (BE)
(74) Representative: Quintelier, Claude

(57) **Abstract**

A device for data communication over a power supply line (1), said device comprising a first communication unit (2) and a set of second communication units (5-1,5-2,...), each of said units having a first connection member (7) provided to be connected to an electrical power supply line, said first and second communication units being provided with a message generator for generating a message and with modulating means for modulating and demodulating according to a powerline data transmission modulation, each of said second units have a second connection member provided to be connected to a load (6) powered by said power supply line, each of said second units further comprise a sensor provided for determining a power value by measuring an electrical power consumed by said connected load, said message generator being provided for inserting said power value into said message and for inserting an address assigned to said first unit into said message.

## Description

The present invention relates to a data communication device, comprising a first communication unit and a set of second communication units, each of said units having a first connection member provided to be connected to an electrical power supply line, said first and second communication units being provided with a message generator for generating a message and with modulating means for forming a message modulated according to a power line data transmission modulation, said first and second communication units being further provided for transmitting said modulated message via said power supply line, said modulating means being further provided for demodulating a received modulated message.

Such a data communication device is known and used for example for monitoring electrical power consumption. Generally the first communication unit is installed at the authority delivering the electrical power and the second units are installed in the consumers current meter. The measured consumed electrical power value is then inserted into the message generated by the message generator of the second unit. Since that message has to be transmitted over a noisy medium, such as the mains, it is necessary to modulate the message according to a powerline data transmission modulation in order to obtain a reliable data transmission. The known device generally operates according to a master-slave relationship, whereby the first communication unit is the master and the second units are the slave.

A drawback of the known device is that they do not enable a power consumption management of individual loads connected to the power supply line, neither an individual control of the loads. The management and control of individual loads within a same local environment, such as a building or a vehicle, needs an additional communication medium where only digital information and no power is present.

It is an object of the present invention to realise a data communication device enabling a control and a power measurement of individual loads within a same local environment while still using the electrical power supply line as a medium for digital information communication.

A data communication device according to the present invention is therefore characterised in that each of said second units have a second connection member, provided to be connected to a load, which load is provided to be powered by said power supply line, each of said second units further comprise a sensor, provided for determining a power value by measuring an electrical power consumed by said connected load, said second units being further provided with a memory for storing, at least temporarily, said power value, said message generator being connected to said memory and provided for retrieving said power value and for inserting said power value into said message, said message generator being further provided for inserting an address assigned to said first unit into said message. The fact that the second units comprise a second connection member enables to assign to each individual electrical load a dedicated second communication unit. The sensor, which belongs to each second unit, enables to determine the amount of power consumed by the load to which the second unit is assigned. The availability of a memory and the possibility to insert an address into the message, which comprises the measured value, provides to the second unit the possibility to generate its own messages and to send them on their own initiative to the first unit. Control of the individual loads is then possible.

A first preferred embodiment of a data communication device according to the invention is characterised in that said first and second connection member of said second units are connected with each other within said second unit. In such a manner the power circulates through the second unit towards the load and the second unit can be switched between the mains' local connection point and the electrical connection of the load.

A second preferred embodiment of a data communication device according to the invention is characterised in that said second unit comprises a relay, which is provided with a first control input for receiving a first instruction signal, said message generator being provided for generating said first instruction signal upon receipt of a first message generated by said first communication unit. The relay enables to manage individually the power consumption of the load in function of the consumed power.

Preferably, each message generator of each second communication unit is provided with an addressing element provided for assigning an address to its second communication unit. This offers a convenient way for addressing each of the second communication units.

The invention will now be described in more details with reference to the accompanying drawings illustrating an embodiment of a data communication device according to the present invention.

In the drawings:
figure 1 and 2 illustrate two different set-ups of a communication device according to the present invention connected to the mains; and
figure 3 illustrates a second communication unit.

In the drawings a same reference has been assigned to a same or an analogous element.

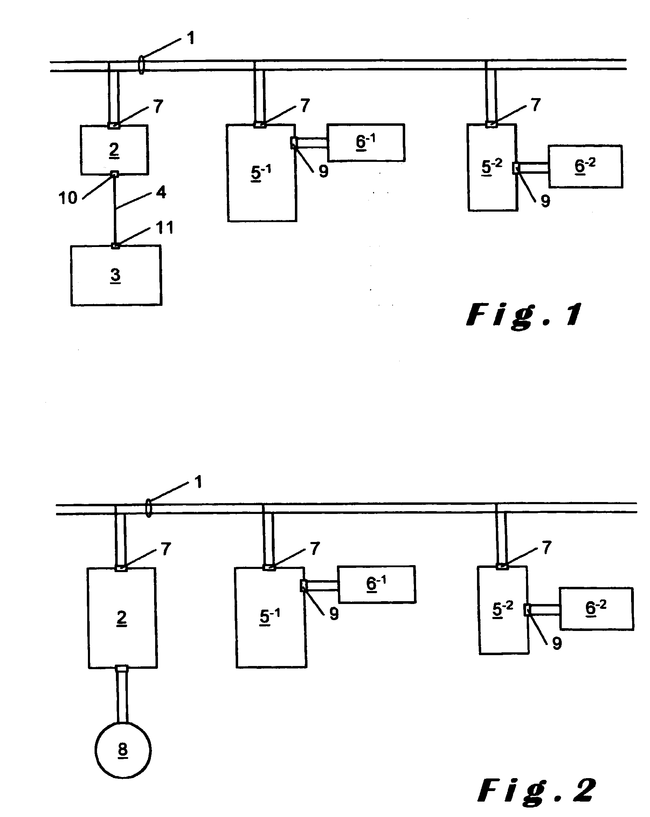

In the embodiments illustrated in figure 1 and 2, a first communication unit 2 and two second communication units 5-1 and 5-2 are connected to an electrical power supply line 1. In the illustrated example only two second communication units are shown, but it will be clear that more than two units or only a single second communication unit can belong to the set of second communication units. The electrical power supply line 1 can be formed by the mains, an electrical cable bundle in a vehicle furnishing the electrical power to the different electric components or a power line output of an electrical power generator.

Each of the communication units 2, 5-1 and 5-2 are provided with a first connection member 7 for connection with the power supply line 1. The loads 6-1 and 6-2 are connected to a second connection member 9 of their respective second unit 5-1, 5-2 in order to be supplied with the electric power available on the supply line 1. According to another embodiment, the loads could be directly connected to the mains 1 and the second connection member of the second unit would then be connected to a current sensing coil, branched on the supply line part, to which the load is connected.

The electrical loads 6-1 or 6-2 can be formed by any electrical load such as for example a lamp, a heater, a motor, a computer etc..

In the embodiment illustrated in figure 1, the first communication unit 2 comprises an I/O interface 10 connected via a communication bus 4 to an I/O interface 11 of a data processing unit 3, for example a Personal Computer. The I/O interfaces are for example formed by standard RS 232 interfaces. However in the embodiment illustrated in figure 2, a load 8, such as for example an alarm generator, operating with power supplied by the mains, is connected to an output of the first communication unit 2. It is also possible to integrate the first and the second communication unit in a single device.

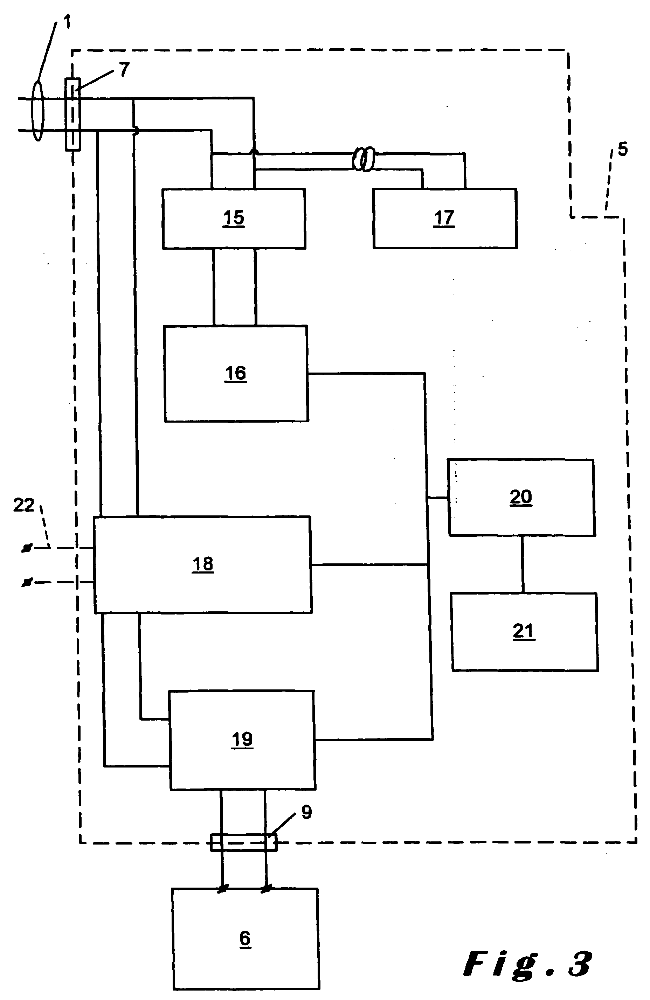

Figure 3 illustrates schematically the construction of a second communication unit 5 as part of a data communication device according to the invention. The electrical power, supplied by the power supply tine 1, is fed to a coupling circuit 15 and to a power station 17 for example formed by a transformer. The power station 17 is galvanically separated from the supply line, for example by means of an inductive coupling. The power station 17 is provided for powering a microcontroller 20 and a memory 21 with an operating power of for example 5 V. The coupling circuit 15 is connected to a powerline communication unit 16. The latter has also a data communication gate connected to the microcontroller 20. The memory is for example formed by a RAM or an EEPROM. An operating member 18, comprising a sensor provided for determining a power value by measuring the electrical power input at the I/O interface 7, is also connected to the power supply line. That operating member 18 is also provided with a data communication gate connected to the microcontroller 20. A load control unit 19 is further connected to the mains and also comprises a data communication gate connected to the microcontroller 20. The load 6 is connectable to the load control unit 19. In the case that the load is directly connected to the mains, the second unit has an additional input 22, indicated with dotted lines, so that the connection between the load control unit 19 and the load can be omitted as well as the load control unit 19 itself.

The coupling circuit 15 is a passive circuit that is provided for galvanically separating the supply line 1 from the second unit. The communication unit 16 is provided with means for modulating and demodulating data, according to a powerline data transmission modulation, to be transmitted or transmitted over the power supply line. The modulating and demodulating means are for example provided for applying the modulation and demodulation according to a spread spectrum modulation or according to a combination of a frequency shift keying (FSK) and a phase shift keying (PSK) modulation. The communication unit is also provided for adding check bits to a message issued by the microcontroller. A physical layer operative within the communication unit 16 comprises these means for modulating and demodulating and is also in communication with a datalink layer provided for acknowledging or not received messages.

The load control unit 19 optionally and dependent on the functions to be performed, also comprises for example a relay, a switch, a triac control and/or a control member.

Suppose now that the load 6 is for example formed by a lamp or a heating device, connected to the second connection member 9 of the second communication unit 5. The electrical current supplied to the load is measured by the sensor which belongs to the operating member 18. The sensor is for example formed by an Ampère meter switched within the power line or inductively coupled to the power line. The sensor is provided either to continuously measure the current or the consumed power or to measure by sampling at request of the microcontroller 20. Preferably the current measurement is continuously, which enables to permanently monitor the current flowing towards the load and to detect abnormal current peaks for example caused by a lightning impact.

The value of the measured current or power is fetched under control of the application layer of the microcontroller 20 and temporarily stored in the memory 21. That value is fetched either by sampling at predetermined times or on request of the first communication unit. That value is then inserted into a message generated by a message generator which belongs to the microcontroller 20 and the communication unit 16. The generated message is supplied to the communication unit 16 in order to be modulated according to the selected powerline data transmission modulation and to be transmitted via the power supply line to the first communication unit 2. If the first and second communication unit form a single unit, the transmission is realised inside the unit.

Upon receipt of such a message by the first communication unit 1, the latter demodulates the message by means of its own communication unit 16. The demodulated message is then read and processed by the microcontroller 20 of the first unit. In function of the contents of the received message, the microcontroller either generates another message to be sent to the second unit, or a signal to activate the load connected to the first unit or stores data in its own memory.

The production of a message will now be described in more details. Suppose the first communication unit 5 requests the status of the second communication unit 6-i. The message generator of the first unit will then produce a status message with the node address of the second unit 6-i. That message will for example comprise the following fields:
- source node address, for example 32 bits, indicating the node address of the first unit;
- source unit address, for example 8 bits, indicating the address of the element inside the unit requesting the information, in this case the microcontroller
- destination node address, for example 32 bits, indicating the node address of the second unit 6-i
- destination unit address, for example 8 bits, indicating in this case the microcontroller of the second unit 6-i
- a message code indicating the kind of message, in this example the status
- a data field
- a checksum for verification purposes

After production, the message is modulated and transmitted via the power supply line 1. Only second unit 6-i will accept the message as only this unit will recognise its destination node address. The other units will, after demodulating and checking the destination node address, ignore the message since it was not addressed to them.

Upon receipt of the message, the microcontroller of the second unit 6-i will decode the message code and the data field and recognise that the status is requested. Moreover the microcontroller will read the contents of memory 21 in order to fetch the indicated power consumption value. The microcontroller will upon receipt of that value either enter that value in the data field of the message to be generated or perform a check operation in order to verify if this value is to be considered as a normal value. In the latter case a message normal or not normal will be generated and introduced into the data field of the message to be produced. The message generator will then prepare a message with analogous fields of the one sent by the first unit. Of course the destination address will now be the one of the first unit. When the message is formed, it is modulated and sent to the first unit via supply line 1.

The second units are also provided to generate messages on their own initiative independently from the first unit. There is thus not a master-slave relation between the first and second units. Suppose now the second unit comprises except for its sensor also a relay for controlling the power supplied to the load. Suppose further that the sensor has unit address U01 and the relay has unit address U00. The microcontroller checks regularly the value of the consumed power measured by the sensor. The microcontroller can be programmed to send that value at predetermined time intervals to the first unit or only when the measured value exceeds a predetermined threshold value. Once the microcontroller has decided to send a message to the first unit, the message generator will be activated for generating a message in order to inform the first unit. The message generator will now for example form the following message:
- source node address SNA = A 00010002 (address of the second unit)
- source unit address: SUA = U01
- destination node address: DNA = A 00010001 (first unit)
- destination source address: DSA = UFF (microcontroller first unit)
- message code = MC = status
- data field: DF = value of consumed power
- check bits
This message will now lead to the formation of a following binding in the node of the second unit: RA 00010001UFF = UO1S where R stands for a remote address.

The first unit will receive this message and react in function of its programming. Suppose for example that the indicated value leads to a switch over of the relay in the second unit which issued the message. The message generator will then generate the following message:
SNA = A00010001
SUA = UFF
DNA = A00010002
DSA = UOO
MC = E01; event
DF = FA3D0107; switch over
check bits
The binding in the node will be GA00010001U01E01 = UOOFA300107S.

This message will then be received by the second unit. The microcontroller will generate a first instruction signal upon receipt of this message generated by the first communication unit This first instruction signal will then be supplied to a first control input of the relay, which will then switch over.

In an analogous manner a dimmer or a control member could be controlled. The dimmer and the control member have respective second and third control inputs for receiving second and third instruction signals generated by the microcontroller of the second unit.

## Claims

1. A data communication device comprising a first communication unit and a set of second communication units, each of said units having a first connection member provided to be connected to an electrical power supply line, said first and second communication units being provided with a message generator for generating a message and with modulating means for forming a message modulated according to a powerline data transmission modulation, said first and second communication units being further provided for transmitting said modulated message via said power supply line, said modulating means being further provided for demodulating a received modulated message, characterised in that each of said second units have a second connection member provided to be connected to a load which load is provided to be powered by said power supply line, each of said second units further comprise a sensor provided for determining a power value by measuring an electrical power consumed by said connected load, said second units being further provided with a memory for storing, at least temporarily, said power value, said message generator being connected to said memory and provided for retrieving said power value and for inserting said power value into said message, said message generator being further provided for inserting an address assigned to said first unit into said message.

2. A data communication device as claimed in claim 1, characterised in that said first and second connection member of said second units are connected with each other within said second unit.

3. A data communication device as claimed in claim 1 or 2, characterised in that said first communication unit comprises an I/O interface, connectable to an external I/O interface of a data processing unit.

4. A data communication device as claimed in any one of the claims 1 to 3, characterised in that said second unit comprises a relay which is provided with a first control input for receiving a first instruction signal, said message generator being provided for generating said first instruction signal upon receipt of a first message generated by said first communication unit.

5. A data communication device as claimed in any one of the claims 1 to 4, characterised in that said second unit comprises a triac control which is provided with a second control input for receiving a second instruction signal, said message generator being provided for generating said second instruction signal upon receipt of a second message generated by said first communication unit.

6. A data communication device as claimed in any one of the claims 1 to 5, characterised in that said second unit comprises a control member which is provided with a third control input for receiving a third instruction signal, said message generator being provided for generating said third instruction signal upon receipt of a third message generated by said first communication unit.

7. A data communication device as claimed in any one of the claims 1 to 6, characterised in that each message generator of each second communication unit is provided with an addressing element provided for assigning an address to its second communication unit.

8. A data communication device as claimed in claim 7, characterised in that said addressing element comprises an address generator provided for generating addresses and supplying them to said message generator which is provided for inserting a received address into a generated message.
